Europäisches Patentamt

European Patent Office

Office européen des brevets

(19)

(11) Publication number: **0 159 845**
A2

# (12) EUROPEAN PATENT APPLICATION

(21) Application number: 85302425.5

(22) Date of filing: 04.04.85

(51) Int. Cl.⁴: **C 01 B 33/28,** C 01 B 33/20,
B 01 J 29/28, B 01 J 29/04

(30) Priority: 16.04.84 US 600680

(43) Date of publication of application: 30.10.85
Bulletin 85/44

(84) Designated Contracting States: **BE DE FR GB IT NL SE**

(71) Applicant: **MOBIL OIL CORPORATION, 150 East 42nd
Street, New York New York 10017 (US)**

(72) Inventor: **Rubin, Mae Koenig, 50 Belmont Avenue, Bala
Cynwyd Pennsylvania 19004 (US)**

(74) Representative: **Grundy, Derek George Ritchie et al,
CARPMAELS & RANSFORD 43, Bloomsbury Square,
London WC1A 2RA (GB)**

(54) Synthesis of crystalline zeolite.

(57) This invention relates to a new and improved form of crystalline silicate, to a new and useful improvement in synthesizing it and to its use as a catalyst for organic compound, e.g. hydrocarbon compound, conversion.

EP 0 159 845 A2

F-2696

## SYNTHESIS OF CRYSTALLINE ZEOLITE

This invention relates to a new way of synthesising a crystalline zeolite, to the use of the zeolite so synthesised as a catalyst for organic compound, e.g. hydrocarbon compound, conversion, and to the zeolite so synthesised.

Zeolites have a crystal lattice which is a rigid three-dimensional framework of $SiO_4$, and frequently $AlO_4$, tetrahedra cross-linked by the sharing of oxygen atoms whereby the ratio of the total aluminum and silicon atoms to oxygen atoms is 1:2. The electrovalence of tetrahedra containing non-tetravalent elements, such as aluminum, is balanced by the inclusion in the crystal of a cation, for example an alkali metal or an alkaline earth metal cation. In the case of aluminosilicates the ratio of lattice aluminum atoms to cationic electrovalence bonds is thus unity. One cation may be exchanged for another, using ion exchange techniques in a conventional manner. By means of such cation exchange, it has been possible to vary the properties of a given aluminosilicate by suitable selection of the cation. The spaces between the tetrahedra are occupied by molecules of water prior to dehydration.

A great variety of synthetic zeolites exists, designated by letter or other convenient symbols, as illustrated by zeolite A (US-A-2,882,243), zeolite X (US-A-2,882,244), zeolite Y (US-A-3,130,007), zeolite ZK-5 (US-A-3,247,195), zeolite ZK-4 (US-A-3,314,752), zeolite ZSM-5 (US-A-3,702,886), zeolite ZSM-11 (US-A-3,709,979), zeolite ZSM-12 (US-A-3,832,449), zeolite ZSM-20 (US-A-3,972,983), ZSM-35 (US-A-4,016,145), ZSM-38 (US-A-4,046,859), and zeolite ZSM-23 (US-A-4,076,842).

The $SiO_2/Al_2O_3$ ratio of a aluminosilicate zeolite is often variable within limits. For example, zeolite X can be synthesised with $SiO_2/Al_2O_3$ ratios of from 2 to 3; zeolite Y, from 3 to about 6. However in some zeolites the upper limit of $SiO_2/Al_2O_3$ ratio is unbounded. ZSM-5 is one such example wherein the $SiO_2/Al_2O_3$ ratio is at least 5 and up to infinity. US-A-3,941,871 discloses a crystalline silicate made from a reaction mixture containing no added alumina and exhibiting the x-ray diffraction pattern characteristic of ZSM-5 type zeolites. US-A-4,061,724, 4,073,865 and 4,104,294 describe crystalline silicates of varying alumina and metal content.

The prior art techniques for synthesis of zeolites use reaction mixtures containing various organic directing agents. The directing agent is extremely important in such synthesis since it functions as a template in the nucleation and growth of the desired zeolite. Different directing agents direct nucleation and growth of different zeolites from even similar reaction mixtures. Even with the same directing agent, however, different zeolites will form occasionally, depending upon such factors as reaction mixture composition.  Still further, the crystallization conditions, such as temperature and time, may affect product type and quality.

A zeolitic structure designated "EU-1" in EP-A-42226 and "TPZ-3" in EP-A-51318 is shown to be synthesized in those Applications from a reaction mixture comprising a hexamethylene diammonium salt directing agent.

An improved, reproducible, lower cost method for preparing a useful zeolite, over an unusually wide range of product aluminum content, exhibiting high purity, high crystallinity, catalytic activity and other valuable properties has now been found.  The method comprises forming a reaction mixture containing sources of alkali metal oxide, an organic nitrogen-containing cation, an oxide of aluminum, an oxide of silicon and water and having a composition, in terms of mole ratios, within the following ranges:

|  | Broad | Preferred |
|---|---|---|
| $SiO_2/Al_2O_3$ | >=100 | >=130 |
| $H_2O/OH^-$ | 70-500 | 80-400 |
| $OH^-/SiO_2$ | 0.08-0.3 | 0.09-0.2 |
| $M/SiO_2$ | 0.08-0.3 | 0.09-0.2 |
| $R/SiO_2$ | 0.05-1.0 | 0.08-0.5 |

wherein R is a cation derived from a dibenzyldimethylammonium compound and M is an alkali metal ion, and maintaining the mixture until crystals of the zeolite are formed. The mole ratio of silica to alumina in the reaction mixture may be infinity or as close thereto as possible. The quantity of OH⁻ is calculated only from the inorganic sources of alkali without any organic base contribution. Reaction conditions required consist of heating the foregoing reaction mixture to a temperature of from about 80°C to about 175°C for a period of time of from about 24 hours to about 120 days. A more preferred temperature range is from about 150°C to about 160°C with the amount of time at a temperature in such range being from about 24 hours to about 8 days. Thereafter, the crystals are separated from the liquid and recovered.

It has also been found that the present method is even more cost efficient when the organic nitrogen-containing cation of the reaction mixture is created in situ. This is accomplished by adding to the reaction mixture, in place of the dibenzyldimethylammonium compound, a combination of dimethylbenzylamine and benzyl halide (e.g. chloride, bromide or iodide), which form in situ the halide salt of dibenzyldimethylammonium.

The digestion of the gel particles is carried out until crystals form. The solid product is separated from the reaction medium, as by cooling the whole to room temperature, filtering and water washing.

The zeolite synthesised according to the invention manifests the x-ray diffraction data set forth in

Table 1 below.

## TABLE 1

Interplanar

| d-spacing (A) | Relative Intensity, I/I$_o$ |
|---|---|
| 20.1 ± .3 | W |
| 11.1 ± .17 | S |
| 10.1 ± .16 | M |
| 9.7 ± .14 | W |
| 5.77 ± .09 | W |
| 5.61 ± .09 | W |
| 4.64 ± .07 | M |
| 4.35 ± .07 | M |
| 4.30 ± .07 | VS |
| 4.00 ± .06 | S |
| 3.85 ± .06 | M |
| 3.70 ± .06 | M |
| 3.42 ± .05 | W |
| 3.35 ± .05 | W |
| 3.27 ± .05 | M |
| 3.24 ± .05 | W |
| 2.94 ± .04 | W |
| 2.53 ± .04 | W |

These values were determined by standard techniques. The radiation was the K-alpha doublet of copper and a diffractometer equipped with a scintillation counter and an associated computer was used. The peak heights, I, and the positions as a function of 2 theta, where theta is the Bragg angle, were determined using algorithms on the computer associated with the spectrometer. From these, the relative intensities, 100 $I/I_O$, where $I_O$ is the intensity of the strongest line or peak, and d (obs.) the interplanar spacing in Angstrom Units (A), corresponding to the recorded lines, were determined. In Table 1, the relative intensities are given in terms of the symbols W=weak, M=medium, S=strong and VS=very strong. In terms of intensities, these may be generally designated as follows:

$$W = 0 - 20$$
$$M = 20 - 40$$
$$S = 40 - 60$$
$$VS = 60 - 100$$

The zeolite synthesized in accordance with the present method exhibits high purity and high crystallinity and significantly enhanced catalytic activity for certain conversions of interest, including cracking and hydrocracking to make aromatic gasoline. It has a wider and higher silica/alumina molar ratio range than previously proposed equivalent structures, allowing for tailoring of that ratio to suit specific purposes. The present method is reproducible, less costly, and easy to carry out.

The particular effectiveness of the presently required different organic directing agent, i.e. the dibenzyldimethylammonium compound, when compared with other directing agents, such as those identified above, is believed due to its ability to function as a template in the nucleation and growth of the zeolite in high silica/-alumina ratio. This different organic directing agent functions in this fashion over an unusually wide range of reaction mixture aluminum contents.

The dibenzyldimethylammonium compound may be, as non-limiting examples, the hydroxide or the halide, e.g. chloride, bromide or iodide. Additional economies are realized if, instead of adding the dibenzyldimethylammonium compound to the reaction mixture, it is formed _in situ_ by adding dimethylbenzylamine and benzyl halide (e.g. chloride) in combination. The molar ratio of dimethylbenzylamine to benzyl halide must be within the range of 0.8 to 1.0 in the reaction mixture, and preferably about 1.0. The _in situ_ formation of the required directing agent saves relative synthesis time and cuts organic reagent costs by a factor of 40 to 100. In either event, a highly crystalline product is obtained.

In the reaction mixture required of the present invention, the mole ratios of $SiO_2/Al_2O_3$ and $OH^-/SiO_2$ are

critical, as is the temperature maintained during
crystallization. If the $SiO_2/Al_2O_3$ mole ratio is below 100
and the $OH^-/SiO_2$ mole ratio is above 0.3 a different
zeolite forms as the predominant product.

The reaction mixture composition can be prepared
from materials which can supply the appropriate oxide.
Such compositions include aluminates, alumina, silicates,
silica hydrosol, silica gel, silicic acid and hydroxides.
Each oxide component utilized in the reaction mixture can
be supplied by one or more essential reactants and they can
be mixed together in any order. For example, any oxide can
be supplied by an aqueous solution, sodium hydroxide or by
an aqueous solution of a suitable silicate; the organic
cation can be supplied by the directing agent compound of
that cation, such as, for example, the hydroxide or a salt,
e.g. halide, such as chloride or bromide. The reaction
mixture can be prepared either batchwise or continuously.
Crystal size and crystallization time will vary with the
exact nature of the reaction mixture employed.

The zeolite prepared hereby can be identified, in
terms of mole ratios of oxides and in the anhydrous state,
as follows:

(0 to 1.0)$X_{2/n}O$:(0 to 1.0)$Al_2O_3$:(100)$SiO_2$
wherein X is at least one cation having a valence n and may
include cation derived from a dibenzyldimethylammonium
compound.

The original cations, e.g. alkali metal, can be replaced, at least in part, by calcination and/or ion exchange with another cation. Thus, the cations of the as-synthesised material may be exchanged with hydrogen or hydrogen ion precursors or with metals of Groups IIA, IIIA, IVA, IB, IIB, IIIB, IVB, VIB or VIII of the Periodic Table. Thus, for example, it is contemplated to exchange the original cations with ammonium ions or with hydronium ions. Catalytically active forms of these would include, in particular, hydrogen, rare earth metals, aluminum, metals of Groups II and VIII of the Periodic Table and manganese.

While the improved crystalline silicate of the present invention may be used in a wide variety of organic compound, e.g. hydrocarbon compound, conversion reactions, it is notably useful in the processes of cracking and hydrocracking. It can be used either in the organic-nitrogen-containing and alkali-metal-containing form, the alkali metal form and hydrogen form or another univalent or multivalent cationic form. It can also be used in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such components can be exchanged into the composition, impregnated therein or physically intimately admixed therewith. Such components can be impregnated by, in the case of platinum, treating the zeolite with a platinum metal-containing ion. Suitable platinum compounds for this purpose include chloroplatinic acid, platinous chloride and various compounds containing the platinum amine complex. Combinations of metals and methods for their introduction can also be used.

When employed either as an adsorbent or as a catalyst in a hydrocarbon conversion process, the zeolite should be dehydrated at least partially. This can be done by heating to a temperature in the range of from about 200°C to about 600°C in an inert atmosphere, such as air, nitrogen, etc. and at atmospheric or subatmospheric pressures for between 1 and 48 hours. Dehydration can also be performed at lower temperature merely by placing the zeolite in a vacuum, but a longer time is required to obtain a particular degree of dehydration. The thermal decomposition product of the freshly synthesized zeolite can be prepared by heating at a temperature up to about 550°C for from 1 hours to about 48 hours.

The zeolite prepared in accordance herewith can have the original cations associated therewith replaced by a wide variety of other cations according to techniques well known in the art. Typical replacing cations include hydrogen, ammonium and metal cations including mixtures thereof. Of the replacing metallic cations, particular preference is given to cations of metals such as rare earths, Mn, Ca, Mg, Zn, Cd, Pd, Ni, Cu, Ti, Al, Sn, Fe and Co.

Typical ion exchange technique would be to contact the synthetic zeolite with a salt of the desired replacing cation or cations. Although a wide variety of salts can be employed, particular preference is given to chlorides, nitrates and sulfates.

Following contact with the salt solution of the desired replacing cation, the zeolite is then preferably washed with water and dried at a temperature ranging from 65°C to about 315°C and thereafter may be calcined in air or other inert gas at temperatures ranging from about 200°C to about 550°C for periods of time ranging from 1 to 48 hours or more to produce a catalytically-active thermal decomposition product thereof.

Regardless of the nature of the replacing cation the spatial arrangement of the aluminum, silicon and oxygen atoms which form the basic crystal lattice of the zeolite remains essentially unchanged.

Catalysts containing the zeolite may be formed in a wide variety of particle sizes. Generally speaking, catalyst particles can be in the form of a powder, a granule, or a molded product, such as extrudate having particle size sufficient to pass through a 2 mesh (Tyler) screen and be retained on a 400 mesh (Tyler) screen. In cases where the catalyst is molded, such as by extrusion, it can be extruded before drying or dried or partially dried and then extruded.

In the case of many catalysts, it is desired to composite a zeolite with another material resistant to the temperatures and other conditions employed in certain
organic conversion processes. Such matrix materials
include active and inactive materials, synthetic or
naturally occurring, as well as inorganic materials such as
clays, silica and/or metal oxides, e.g. alumina. Suitable
matrices are described in our EP-A-1695.

Employing a catalytically active form of a
catalyst comprising the zeolite of this invention
containing a hydrogenation component, reforming stocks can
be reformed employing a temperature between 370°C and
540°C. The pressure can be between 100 and 1000 psig (7.9
to 70 bar), but is preferably between 200 and 700 psig
(14.8 to 49.3 bar). The liquid hourly space velocity is
generally between 0.1 and 10 hr$^{-1}$, preferably between 0.5
and 4 hr$^{-1}$ and the hydrogen to hydrocarbon mole ratio is
generally between 1 and 20, preferably between 4 and 12.

The catalyst can also be used for hydroisomerization of normal paraffins, when provided with a hydrogenation component, e.g. platinum. Hydroisomerization is
carried out at a temperature between 90°C to 370°C,
preferably 140°C to 290°C, with a liquid hourly space
velocity between 0.01 and 2 hr$^{-1}$, preferably between 0.25
and 0.50 hr$^{-1}$, employing hydrogen such that the hydrogen to
hydrocarbon mole ratio is between 1 and 5. Additionally,
the catalyst can be used for olefin or aromatics
isomerization employing temperatures between 0°C and 370°C.

The catalyst can also be used for reducing the pour point of gas oils. This process is carried out at a liquid hourly space velocity between about 10 and about 30 hr$^{-1}$ and a temperature between about 400°C and 540°C.

Other reactions which can be accomplished employing the catalyst of this invention containing a metal, e.g. platinum, include hydrogenation-dehydrogenation reactions and desulfurization reactions, olefin polymerization (oligomerization), and other organic compound conversions such as the conversion of alcohols (e.g. methanol) to hydrocarbons.

In the following examples, which illustrate the invention, whenever adsorption data are set forth for comparison of sorptive capacities for water, cyclohexane and n-hexane, they were determined as follows:

A weighed sample of the calcined adsorbant was contacted with the desired pure adsorbate vapor in an adorption chamber, evacuated to 1 mm and contacted with 12 mm Hg of water vapor or 40 mm Hg of n-hexane, or cyclohexane vapor, pressures less than the vapor-liquid equilibrium pressure of the respective adsorbate at room temperature. The pressure was kept constant (within about ± 0.5 mm) by addition of adsorbate vapor controlled by a monostat during the adsorption period, which did not exceed about 8 hours. As adsorbate was adsorbed by the sorbant material, the decrease in pressure caused the monostat to open a valve which admitted more adsorbate vapor to the chamber to restore the above control pressures. Sorption was complete when the pressure change was not sufficient to activate the monostat. The increase in weight was calculated as the adsorption capacity of the sample in g/100 g of calcined adsorbant.

The Alpha Test is described in The Journal of Catalysis, Vol IV, pp. 522-529 (August 1965).

### EXAMPLE 1

A 22.0 gram quantity of dibenzyldimethylammonium chloride was dissolved in a solution of 0.42 gram of sodium aluminate (43.3% $Al_2O_3$, 32.2% $Na_2O$ and 25.6% $H_2O$), 3.17 grams NaOH and 40.0 grams of water. The resulting solution was added to 180 grams of colloidal silica (30% solution). The total was then thoroughly mixed. The mixture, which had the composition in mole ratios:

| | |
|---|---|
| $SiO_2/Al_2O_3$ | = 500 |
| $H_2O/SiO_2$ | = 10.22 |
| $OH^-/SiO_2$ | = 0.093 |
| $Na/SiO_2$ | = 0.093 |
| $R/SiO_2$ | = 0.093 |

wherein R is the dibenzyldimethylammonium cation, was then allowed to crystallize in a polypropylene jar under static conditions at 100°C for 54 days. The product crystals were separated from the remaining mixture, filtered, washed with water and dried at 115°C.

Chemical analysis showed the composition of the product to be:

| | |
|---|---|
| 0.85 wt.% | N |
| 0.56 wt.% | Na |
| 0.36 wt.% | $Al_2O_3$ |
| 81.2 wt.% | $SiO_2$ |
| 83.9 wt.% | Ash |
| 383 | $SiO_2/Al_2O_3$ molar ratio |

X-ray analysis showed the product to consist of a zeolite having the x-ray data of Table 1 with trace quantities of a different zeolite present.

A quantity of the product of this example was calcined at 500°C for 16 hours in air, and then tested for sorption properties. The results were:

9.0 wt.% cyclohexane sorbed,

10.6 wt.% n-hexane sorbed, and

6.7 wt.% water sorbed.

Surface area of the calcined material was 463 $m^2/g$.

## EXAMPLE 2

A 22 gram quantity of dibenzyldimethylammonium chloride was dissolved in a solution of 0.85 gram of sodium aluminate, 3.03 grams of NaOH and 40 grams of water. The resulting solution was added to 180 grams colloidal silica (30%). The total was then thoroughly mixed. The mixture, which had the composition in mole ratios:

$SiO_2/Al_2O_3$ = 250

$H_2O/SiO_2$ = 10.24

$OH^-/SiO_2$ = 0.094

$Na/SiO_2$ = 0.094

$R/SiO_2$ = 0.093

was then allowed to crystallize in a polypropylene jar under static conditions at 100°C for 53 days. The product crystals were separated from the remaining mixture, filtered, washed with water and dried at 115°C.

Chemical analysis showed the composition of the product to be:

| 0.97 wt.% | N |
| 0.43 wt.% | Na |
| 0.55 wt.% | $Al_2O_3$ |
| 81.2 wt.% | $SiO_2$ |
| 82.4 wt.% | Ash |
| 251 | $SiO_2/Al_2O_3$ molar ratio |

X-ray analysis showed the product to consist of a zeolite having the x-ray data of Table 1 with trace quantities of a different zeolite present.

A quantity of the product of this example was calcined at 500°C for 16 hours in air, and then tested for sorption properties. The results were:

11.5 wt.% cyclohexane sorbed,

11.4 wt.% n-hexane sorbed, and

7.9 wt.% water sorbed.

Surface area of the calcined material was 484 $m^2$/g.

## EXAMPLE 3

A 22 gram quantity of dibenzyldimethylammonium chloride was dissolved in a solution of 0.21 gram of sodium aluminate, 3.26 grams of NaOH and 40 grams of water. The resulting solution was added to 180 grams colloidal silica (30% solution). The total was then thoroughly mixed. The mixture, which had the composition in mole ratios:

| | |
|---|---|
| $SiO_2/Al_2O_3$ | = 1010 |
| $H_2O/SiO_2$ | = 10.22 |
| $OH^-/SiO_2$ | = 0.093 |
| $Na/SiO_2$ | = 0.093 |
| $R/SiO_2$ | = 0.093 |

was then allowed to crystallize in a polypropylene jar under static conditions at 100°C for 22 days. The product crystals were separated from the remaining mixture, filtered, washed with water and dried at 115°C.

Chemical analysis showed the composition of the product to be:

| | |
|---|---|
| 0.84 wt.% | N |
| 0.54 wt.% | Na |
| 0.24 wt.% | $Al_2O_3$ |
| 82.8 wt.% | $SiO_2$ |
| 85.2 wt.% | Ash |
| 586 | $SiO_2/Al_2O_3$ molar ratio |

X-ray analysis showed the product to consist of a zeolite having the x-ray data of Table 1 with trace quantities of a different zeolite present.

A quantity of the product of this example was calcined at 500°C for 16 hours in air, and then tested for sorption properties. The results were:

8.1 wt.% cyclohexane sorbed,

8.8 wt.% n-hexane sorbed, and

8.2 wt.% water sorbed.

Surface area of the calcined material was 406 $m^2/g$.

### EXAMPLE 4

To a solution of 0.42 gram of sodium aluminate (43.3% $Al_2O_3$ and 32.2% $Na_2O$), 0.80 gram of NaOH and 20.0 grams of water was added 5.3 grams of dimethylbenzylamine and 5.2 grams of benzyl chloride. This mixture was then added to 90.0 grams of colloidal silica (30%). The total was then thoroughly mixed. The mixture, which had the composition in mole ratios:

| | |
|---|---|
| $SiO_2/Al_2O_3$ | = 252 |
| $H_2O/SiO_2$ | = 10.24 |
| $OH^-/SiO_2$ | = 0.054 |
| $Na/SiO_2$ | = 0.054 |
| $R/SiO_2$ | = 0.18 |

wherein R is the reaction product cation of dimethylbenzylamine and benzyl chloride, i.e. dibenzyldimethylammonium chloride, was then allowed to crystallize in a glass-lined stainless steel static reactor at 140°C for 21 days. The product crystals were separated from the remaining mixture, filtered, washed with water and dried at 115°C.

Chemical analysis showed the composition of the product to be:

| | |
|---|---|
| 0.60 wt.% | N |
| 0.34 wt.% | Na |
| 0.52 wt.% | $Al_2O_3$ |
| 86.07 wt.% | $SiO_2$ |
| 87.56 wt.% | Ash |
| 281 | $SiO_2/Al_2O_3$ molar ratio |

The result of x-ray analysis accorded with Table 1.

A quantity of the product of this example was calcined at 500°C for 16 hours in air, and then tested for sorption properties. The results were:

1.4 wt.% cyclohexane sorbed,

7.3 wt.% n-hexane sorbed, and

4.4 wt.% water sorbed.

Surface area of the calcined material was 311 $m^2/g$.

### EXAMPLE 5

To a solution of 0.85 gram of sodium aluminate (43.3% $Al_2O_3$ and 32.2% $Na_2O$), 4.0 grams of NaOH and 40.0 grams of water was added 11.4 grams of dimethylbenzylamine and 10.7 grams of benzyl chloride. This mixture was then added to 180 grams of colloidal silica (30% solution). The total was then thoroughly mixed. The mixture, which had the composition in mole ratios:

| | |
|---|---|
| $SiO_2/Al_2O_3$ | = 249 |
| $H_2O/SiO_2$ | = 10.2 |
| $OH^-/SiO_2$ | = 0.12 |
| $Na/SiO_2$ | = 0.12 |
| $R/SiO_2$ | = 0.19 |

wherein R is the reaction product cation of dimethylbenzylamine and benzyl chloride, i.e. dibenzyldimethylammonium chloride, was then allowed to crystallize in a polypropylene jar at 100°C for 47 days. The product crystals were separated from the remaining mixture, filtered, washed with water and dried at 115°C.

Chemical analysis showed the composition of the product to be:

| | |
|---|---|
| 0.85 wt.% | N |
| 0.53 wt.% | Na |
| 0.70 wt.% | $Al_2O_3$ |
| 79.9 wt.% | $SiO_2$ |
| 84.8 wt.% | Ash |
| 194 | $SiO_2/Al_2O_3$ molar ratio |

The result of x-ray analysis accorded with Table 1.

A quantity of the product of this example was calcined at 500°C for 16 hours in air, and then tested for sorption properties. The results were:

-21-

12.5 wt.% cyclohexane sorbed,

11.3 wt.% n-hexane sorbed, and

8.7 wt.% water sorbed.

Surface area of the calcined material was 443 $m^2/g$.


## EXAMPLE 6

A 33.8 gram quantity of dibenzyldimethylammonium chloride was dissolved in a solution of 1.5 grams of NaOH and 195 grams of water. The resulting solution was added to 78.0 grams colloidal silica (30% solution). The total was then thoroughly mixed. The mixture, which had the composition in mole ratios:

| | |
|---|---|
| $SiO_2/Al_2O_3$ | $= \infty$ |
| $H_2O/SiO_2$ | $= 35.6$ |
| $OH^-/SiO_2$ | $= 0.096$ |
| $Na/SiO_2$ | $= 0.096$ |
| $R/SiO_2$ | $= 0.33$ |

was then allowed to crystallize in a polypropylene jar under stirred (350 rpm) conditions at 150°C for 21 days. The product crystals were separated from the remaining mixture, filtered, washed with water and dried at 115°C.

Chemical analysis showed the composition of the product to be:

| 0.53 wt.% | N |
|-----------|---|
| 0.24 wt.% | Na |
| 555 ppm | $Al_2O_3$ |
| 88.5 wt.% | $SiO_2$ |
| 87.4 wt.% | Ash |
| 2711 | $SiO_2/Al_2O_3$ molar ratio |

Table 2 lists the x-ray diffraction pattern of the product. The crystals were dried at $115^{\circ}C$ in air prior to x-ray analysis.

### TABLE 2

| Interplanar d-spacings (A) | Observed 2 x Theta | Relative Intensities, $I/I_o$ |
|---|---|---|
| 20.9 | 4.22 | 10 |
| 11.2 | 7.86 | 27 |
| 10.3 | 8.60 | 37 |
| 9.85 | 8.98 | 8 |
| 7.76 | 11.40 | 6 |
| 7.56 | 11.70 | 4 |
| 6.96 | 12.72 | 2 |
| 5.81 | 15.24 | 12 |
| 5.64 | 15.70 | 4 |
| 4.87 | 18.20 | 3 |
| 4.67 | 18.99 | 95 |
| 4.42 | 20.08 | 10 |

| | | |
|---|---|---|
| 4.40 | 20.20 | 13 |
| 4.33 | 20.51 | 68 |
| 4.02 | 22.11 | 100 |
| 3.83 | 23.23 | 83 |
| 3.71 | 23.98 | 26 |
| 3.66 | 24.31 | 6 |
| 3.60 | 24.75 | 5 |
| 3.45 | 25.82 | 9 |
| 3.37 | 26.42 | 22 |
| 3.29 | 27.10 | 18 |
| 3.26 | 27.35 | 24 |
| 3.16 | 28.22 | 5 |
| 3.10 | 28.79 | 6 |
| 3.07 | 29.10 | 3 |
| 3.02 | 29.60 | 2 |
| 2.97 | 30.10 | 6 |
| 2.95 | 30.30 | 4 |
| 2.91 | 30.69 | 3 |
| 2.71 | 33.08 | 4 |
| 2.66 | 33.70 | 5 |
| 2.63 | 34.03 | 2 |
| 2.57 | 34.85 | 4 |
| 2.55 | 35.25 | 32 |
| 2.48 | 36.18 | 10 |
| 2.41 | 37.28 | 6 |
| 2.40 | 37.45 | 4 |
| 2.33 | 38.65 | 4 |

| | | |
|---|---|---|
| 2.30 | 39.15 | 2 |
| 2.15 | 42.00 | 2 |
| 2.12 | 42.61 | 2 |
| 2.10 | 43.08 | 2 |
| 2.07 | 43.80 | 1 |
| 2.04 | 44.50 | 2 |
| 2.02 | 44.85 | 2 |
| 2.00 | 45.39 | 5 |
| 1.95 | 46.50 | 4 |
| 1.92 | 47.30 | 5 |
| 1.88 | 48.48 | 3 |
| 1.845 | 49.40 | 3 |
| 1.83 | 49.90 | 3 |
| 1.78 | 51.12 | 2 |
| 1.76 | 52.10 | 2 |
| 1.73 | 52.92 | 3 |
| 1.70 | 53.80 | 2 |
| 1.67 | 54.85 | 2 |
| 1.64 | 56.18 | 11 |
| 1.63 | 56.60 | 2 |

These x-ray results indicated 135% product crystallinity in relation to a standard sample.


## EXAMPLE 7

A 22.1 gram quantity of dibenzyldimethylammonium chloride was dissolved in a solution of 0.85 gram of sodium aluminate, 4.2 grams of NaOH and 180 grams of water. The
resulting solution was added to 60.0 grams Hi-Sil
(precipitated hydrated $SiO_2$ containing about 6 wt.% free
water and about 4.5 wt.% bound water of hydration and
having a particle size of about 0.02 micron). The total
was then thoroughly mixed. The mixture, which had the
composition in mole ratios:

$SiO_2/Al_2O_3$ = 249

$H_2O/SiO_2$ = 11.1

$OH^-/SiO_2$ = 0.13

$Na/SiO_2$ = 0.13

$R/SiO_2$ = 0.094

was then allowed to crystallize in a stainless steel
reactor under stirred (350 rpm) conditions at 150°C for 8
days. The product crystals were separated from the
remaining mixture, filtered, washed with water and dried at
115°C.

Chemical analysis showed the composition of the
product to be:

0.37 wt.%        Na

1.1 wt.%         $Al_2O_3$

83.7 wt.%        $SiO_2$

87.33 wt.%       Ash

129              $SiO_2/Al_2O_3$ molar ratio

The x-ray results indicated a highly crystalline
material.

A quantity of the product of this example was calcined at 540°C for 16 hours in air, and then tested for sorption properties. The results were:

3.4 wt.% cyclohexane sorbed,

7.8 wt.% n-hexane sorbed, and

5.1 wt.% water sorbed.

Surface area of the calcined material was 304 $m^2/g$.

## EXAMPLE 8

A 105 gram quantity of dibenzyldimethylammonium chloride was dissolved in a solution of 4.08 grams sodium aluminate, 19.2 grams NaOH and 192 grams of water. The resulting solution was then added to 864.0 grams colloidal silica (30% solution). The total was then thoroughly mixed. The mixture, which had the composition in mole ratios:

| | |
|---|---|
| $SiO_2/Al_2O_3$ | = 249 |
| $H_2O/SiO_2$ | = 10.25 |
| $OH^-/SiO_2$ | = 0.12 |
| $Na/SiO_2$ | = 0.12 |
| $R/SiO_2$ | = 0.092 |

was then allowed to crystallize in a stainless steel reactor under stirred (350 rpm) conditions at 140°C for 5 days. The product crystals were separated from the remaining mixture, filtered, washed with water and dried at 115°C.

Chemical analysis showed the composition of the product to be:

| | |
|---|---|
| 0.73 wt.% | N |
| 0.49 wt.% | Na |
| 0.67 wt.% | $Al_2O_3$ |
| 85.2 wt.% | $SiO_2$ |
| 85.78 wt.% | Ash |
| 241 | $SiO_2/Al_2O_3$ molar ratio |

Table 3 lists the x-ray diffraction pattern of the product.

## TABLE 3

| Interplanar d-spacings (A) | Observed 2 x Theta | Relative Intensities, $I/I_o$ |
|---|---|---|
| 20.7 | 4.27 | 2 |
| 11.1 | 7.94 | 21 |
| 11.05 | 8.00 | 17 |
| 10.21 | 8.66 | 14 |
| 7.70 | 11.50 | 3 |
| 6.90 | 12.80 | 3 |
| 5.80 | 15.28 | 4 |
| 5.63 | 15.74 | 4 |
| 4.88 | 18.20 | 2 |

| | | |
|---|---|---|
| 4.66 | 19.04 | 35 |
| 4.44 | 20.01 | 12 |
| 4.40 | 20.20 | 25 |
| 4.32 | 20.55 | 100 |
| 4.01 | 22.17 | 60 |
| 3.83 | 23.25 | 34 |
| 3.70 | 24.02 | 27 |
| 3.65 | 24.41 | 3 |
| 3.59 | 24.78 | 3 |
| 3.44 | 25.87 | 14 |
| 3.36 | 26.5 | 19 |
| 3.29 | 27.11 | 43 |
| 3.25 | 27.43 | 25 |
| 3.15 | 28.30 | 8 |
| 3.10 | 28.84 | 7 |
| 3.05 | 29.24 | 3 |
| 3.01 | 29.68 | 1 |
| 2.96 | 30.14 | 9 |
| 2.94 | 30.46 | 5 |
| 2.90 | 30.94 | 2 |
| 2.70 | 33.12 | 5 |
| 2.65 | 33.77 | 3 |
| 2.63 | 34.12 | 4 |
| 2.57 | 34.85 | 3 |
| 2.54 | 35.28 | 13 |
| 2.52 | 35.64 | 3 |
| 2.48 | 36.22 | 4 |

| | | |
|---|---|---|
| 2.41 | 37.32 | 11 |
| 2.32 | 38.75 | 6 |
| 2.30 | 39.16 | 4 |
| 2.12 | 42.69 | 4 |
| 2.06 | 43.94 | 1 |
| 2.00 | 45.44 | 5 |
| 1.95 | 46.52 | 7 |
| 1.92 | 47.33 | 7 |
| 1.88 | 48.50 | 4 |
| 1.84 | 49.48 | 4 |
| 1.78 | 51.21 | 5 |
| 1.73 | 53.02 | 3 |
| 1.70 | 53.79 | 3 |
| 1.64 | 55.98 | 6 |
| 1.62 | 56.64 | 3 |
| 1.59 | 58.11 | 2 |
| 1.55 | 59.51 | 2 |

These x-ray results indicated a 135% product crystallinity in relation to a standard sample.

A quantity of the product of this example was calcined at 540°C for 16 hours in air, and then tested for sorption properties.  The results were:

9.3 wt.% cyclohexane sorbed,

8.4 wt.% n-hexane sorbed, and

4.7 wt.% water sorbed.

Surface area of the calcined material was 360 $m^2/g$.

## EXAMPLE 9

To a solution of 0.96 grams of NaOH and 150 grams of water was added 10.96 grams of dimethylbenzylamine and 10.24 grams of benzyl chloride. This mixture was then added to 48.0 grams of colloidal silica (30% solution). The total was then thoroughly mixed. The mixture, which had the composition in mole ratios:

$SiO_2/Al_2O_3$     = $\infty$

$H_2O/SiO_2$     = 42.6

$OH^-/SiO_2$     = 0.10

$Na/SiO_2$     = 0.10

$R/SiO_2$     = 0.67

wherein R is the reaction product cation of dimethylbenzylamine and benzyl chloride, i.e. dibenzyldimethylammonium chloride, was then allowed to crystallize in a static polypropylene jar at 100°C for 121 days. The product crystals were separated from the remaining mixture, filtered, washed with water and dried at 115°C.

Chemical analysis showed the composition of the product to be:

585 ppm     $Al_2O_3$

84.4 wt.%     $SiO_2$

85.69 wt.%     Ash

2453     $SiO_2/Al_2O_3$ molar ratio

The x-ray results indicated a 75% product crystallinity in relation to a standard sample.

## EXAMPLE 10

To a solution of 0.85 gram of sodium aluminate (43.3% $Al_2O_3$ and 32.2% $Na_2O$), 3.5 grams of NaOH, 0.7 gram of 86% KOH (86%) and 40.0 grams of water was added 5.7 grams of dimethylbenzylamine and 5.4 grams of benzyl chloride. This mixture was then added to 180 grams of colloidal silica (30% solution). The total was then thoroughly mixed. The mixture, which had the composition in mole ratios:

| | |
|---|---|
| $SiO_2/Al_2O_3$ | = 249 |
| $H_2O/SiO_2$ | = 10.24 |
| $OH^-/SiO_2$ | = 0.12 |
| $K^+/(K^++Na^+)$ | = 0.10 |
| $R/SiO_2$ | = 0.094 |

wherein R is reaction product cation of dimethylbenzylamine and benzyl chloride, was then allowed to crystallize in a static polypropylene jar at 100°C for 57 days. The product crystals were separated from the remaining mixture, filtered, washed with water and dried at 115°C.

Chemical analysis showed the composition of the product to be:

| | |
|---|---|
| 0.57 wt.% | N |
| 0.52 wt.% | Na |
| 800 ppm | K |
| 0.71 wt.% | $Al_2O_3$ |
| 85.3 wt.% | $SiO_2$ |
| 85.3 wt.% | Ash |

204         $SiO_2/Al_2O_3$ molar ratio

Table 4 lists the x-ray diffraction pattern of the product of this example.

## TABLE 4

| Interplanar d-spacings (A) | Observed 2 x Theta | Relative Intensities, $I/I_0$ |
|---|---|---|
| 20.81 | 4.25 | 1 |
| 11.15 | 7.93 | 20 |
| 10.15 | 8.72 | 14 |
| 9.76 | 9.06 | 4 |
| 7.70 | 11.49 | 3 |
| 6.91 | 12.81 | 3 |
| 5.80 | 15.27 | 3 |
| 5.64 | 15.71 | 4 |
| 4.88 | 18.18 | 2 |
| 4.66 | 19.02 | 34 |
| 4.44 | 20.02 | 14 |
| 4.39 | 20.23 | 26 |
| 4.32 | 20.56 | 100 |
| 4.01 | 22.15 | 56 |
| 3.82 | 23.26 | 34 |
| 3.70 | 24.04 | 25 |

| | | |
|---|---|---|
| 3.64 | 24.43 | 4 |
| 3.58 | 24.84 | 4 |
| 3.44 | 25.92 | 17 |
| 3.37 | 26.47 | 21 |
| 3.28 | 27.14 | 47 |
| 3.25 | 27.44 | 26 |
| 3.16 | 28.28 | 11 |
| 3.09 | 28.85 | 8 |
| 3.06 | 29.21 | 3 |
| 2.96 | 30.18 | 9 |
| 2.94 | 30.45 | 5 |
| 2.89 | 30.91 | 2 |
| 2.70 | 33.13 | 6 |
| 2.65 | 33.76 | 4 |
| 2.63 | 34.10 | 5 |
| 2.57 | 34.86 | 3 |
| 2.54 | 35.28 | 13 |
| 2.52 | 35.70 | 2 |
| 2.48 | 36.26 | 4 |
| 2.40 | 37.38 | 11 |
| 2.32 | 38.75 | 5 |
| 2.30 | 39.19 | 5 |
| 2.16 | 42.74 | 4 |
| 2.00 | 45.41 | 5 |
| 1.95 | 46.56 | 8 |
| 1.92 | 47.35 | 7 |
| 1.88 | 48.54 | 4 |

| 1.84 | 49.44 | 5 |
|---|---|---|
| 1.82 | 49.97 | 2 |
| 1.785 | 51.16 | 4 |
| 1.73 | 53.03 | 4 |
| 1.70 | 53.86 | 3 |
| 1.64 | 56.00 | 7 |
| 1.62 | 56.70 | 3 |
| 1.59 | 58.15 | 3 |
| 1.56 | 59.57 | 2 |

These x-ray results indicate 120% product crystallinity in relation to a standard sample.

A quantity of the product of this example was calcined at 540°C for 16 hours in air, and then tested for sorption properties. The results were:

    3.1 wt.% cyclohexane sorbed,

    7.3 wt.% n-hexane sorbed, and

    5.7 wt.% water sorbed.

Surface area of the calcined material was 327 $m^2/g$.

## EXAMPLE 11

Fifteen grams of the dried zeolite product from Example 2 were calcined in air at 540°C for 10 hours. Five $NH_4$ ion exchanges were carried out at 83°C with 10 cc of 5% $NH_4Cl$ solution per gram of zeolite sample for 1 hour each to reduce the sodium level of the sample to less than 0.01 wt.%. The ion exchanged sample was washed, dried and sized to 14/25 mesh prior to a final air calcination for 10 hours at 540°C. The calcined sample was tested for its hydrocarbon cracking activity in the Alpha Test and was found to have an Alpha Value of 46.


## EXAMPLE 12

Fifteen grams of dried zeolite product from Example 8 were calcined in a nitrogen stream ᵤ 540°C for 3 hours followed by 3 hours in an air stream at that temperature. Five NH4Cl ion exchanges were carried out at 83°C with 10 cc of 5% NH4Cl solution per gram of zeolite sample for 1 hour each to reduce the sodium level of the sample to less than 0.01 wt.%. The ion exchanged sample was washed, dried and sized to 14/25 mesh prior to a final air calcination for 3 hours at 540°C. The calcined sample was tested for its hydrocarbon cracking activity in the Alpha Test and was found to have an Alpha Value of 45.

## CLAIMS

1. A method for synthesizing a crystalline zeolite having the x-ray diffraction pattern of Table 1 of the specification and having a composition in the anhydrous state, expressed in terms of mole ratios of oxides, as follows:

$(0$ to $1)X_{2/n}O:(0$ to $1.0)Al_2O_3:(100)SiO_2$

wherein X is at least one cation of valence n, which comprises preparing a mixture containing sources of alkali metal oxide, optionally an oxide of aluminum, a dibenzyldimethylammonium compound, an oxide of silicon and water and having a composition, in terms of mole ratios, within the following ranges:

| | |
|---|---|
| $SiO_2/Al_2O_3$ | $>= 100$ |
| $H_2O/OH^-$ | $= 70-500$ |
| $OH^-/SiO_2$ | $= 0.08-0.3$ |
| $M/SiO_2$ | $= 0.08-0.3$ |
| $R/SiO_2$ | $= 0.05-1.0$ |

wherein M is alkali metal and R is dibenzyldimethylammonium, and maintaining the mixture at a temperature of 80°C to 175°C until crystals of the zeolite are formed.

2. A method for synthesizing a crystalline silicate having a composition as synthesised in the anhydrous state, expressed in terms of mole ratios of oxides, as follows:

(0.2 to 6)$R_2O$:(0 to 3)$M_{2/n}O$:(0 to 1.0)$Al_2O_3$:(100)$SiO_2$ wherein M is at least one alkali metal cation having the valence n, and R is a cation derived from the reaction product of dimethylbenzylamine and benzyl halide, and exhibiting a characteristic x-ray diffraction pattern as shown in Table 1 of the specification, which comprises preparing a mixture containing sources of alkali metal oxide, optionally an oxide of aluminum, an oxide of silicon, dimethylbenzylamine, benzyl halide and water and having a composition, in terms of mole ratios, within the following ranges:

| | |
|---|---|
| $SiO_2/Al_2O_3$ | >= 100 |
| $H_2O/OH^-$ | = 70-500 |
| $OH^-/SiO_2$ | = 0.08-0.3 |
| $M/SiO_2$ | = 0.08-0.3 |
| $R/SiO_2$ | = 0.05-1.0 |

wherein M is at least one alkali metal cation, R is the cation of the reaction product of dimethylbenzylamine and benzyl halide, and maintaining the mixture at a temperature of from about 80°C to about 175°C until crystals of the crystalline silicate are formed.

3. A method according to claim 1 or claim 2 wherein said mixture has a composition, in terms of mole ratios, as follows:

0159845

-38-

| | |
|---|---|
| $SiO_2/Al_2O_3$ | $>= 130$ |
| $H_2O/OH^-$ | $= 80-400$ |
| $OH^-/SiO_2$ | $= 0.09-0.2$ |
| $M/SiO_2$ | $= 0.09-0.2$ |
| $R/SiO_2$ | $= 0.08-0.5$ |

4.  A method according to claim 1 wherein the dibenzyldimethylammonium compound is the halide or the hydroxide.

5.  A method according to claim 4 wherein the halide is the chloride, bromide or iodide.

6.  A synthetic zeolite having the x-ray diffraction pattern of Table 1 of the specification and having the composition in the anhydrous state, expressed in terms of mole ratios of oxides, as follows:

$$(0-1)X_{2/n}O:(0 \text{ to } 1.0)Al_2O_3:(100)SiO_2$$

wherein X represents cations which are partly alkali metal and partly cations derived from a dibenzyldimethylammonium compound.

7.  A zeolite according to claim 6 wherein M is sodium.

8.  A zeolite according to claim 6 or claim 7 wherein the cations X have been replaced by hydrogen, hydrogen precursors, rare earth metal or metal from Groups IIA, IIIA, IVA, IB, IIB, IIIB, IVB, VIB and VIII of the Periodic Table of Elements.

9. Use of the zeolite claimed in any of claims 6 to 8 as catalyst or catalyst component in a process for the catalytic conversion of an organic feed.